## Europäisches Patentamt
## European Patent Office
## Office européen des brevets

(19)

(11) Publication number: **0 131 364**
**B1**

(12)

# EUROPEAN PATENT SPECIFICATION

(45) Date of publication of patent specification: **20.08.86**

(51) Int. Cl.⁴: **F 02 M 19/12, F 16 K 27/02**

(21) Application number: **84303538.7**

(22) Date of filing: **25.05.84**

(54) Valve assembly.

(30) Priority: **07.07.83 US 511534**

(43) Date of publication of application:
**16.01.85 Bulletin 85/03**

(45) Publication of the grant of the patent:
**20.08.86 Bulletin 86/34**

(84) Designated Contracting States:
**DE FR GB**

(56) References cited:
**DE-A-2 829 398**
**GB-A-2 067 719**

(73) Proprietor: **GENERAL MOTORS CORPORATION**
**General Motors Building**
**3044 West Grand Boulevard**
**Detroit Michigan 48202 (US)**

(72) Inventor: **Griffin, Michael Douglas**
**274 Alexander, Apt. D-3**
**Rochester New York 14607 (US)**
Inventor: **Gural, John Anthony**
**308 Thornell Road**
**Pittsford New York, 14534 (US)**
Inventor: **Lamirande, Donald Joseph**
**41 Hawthorne Drive**
**Spencerport New York, 14559 (US)**

(74) Representative: **Breakwell, John Neil Bower**
**et al**
**GM Patent Section Luton Office (F6)**
**P.O. Box No. 3 Kimpton Road**
**Luton Beds. LU2 0SY (GB)**

EP 0 131 364 B1

Courier Press, Leamington Spa, England.

## Description

This invention relates to a valve assembly, as specified in the preamble of claim 1, for example as disclosed in GB—A—2067719.

Air flow to conventional automotive spark-ignition internal combustion engines is controlled by a butterfly throttle valve secured to a valve shaft that is journalled for rotation in a throttle body. A throttle lever secured to the shaft is operated to position the throttle valve so that the desired air flow is admitted through the throttle body to the engine.

In some applications, an axial load on the shaft can cause the throttle valve to scrape on its bore. The wear which can result tends to admit more air flow through the throttle body than was originally calibrated for a particular throttle position.

The present invention is concerned with achieving a valve assembly construction which effectively limits axial displacement of the valve shaft and thereby precludes substantial wear of the valve relative to its bore.

To this end a valve assembly in accordance with the present invention is characterised by the features specified in the characterising portion of claim 1.

The retainer that is secured to the shaft and has an interfering engagement with the nut to prevent rotation of the nut about the shaft may comprise the throttle lever itself, or it may comprise a separate element.

In the drawings:

Figure 1 is a plan view, with parts broken away and in section, of an internal combustion engine throttle body comprising one embodiment of a valve assembly in accordance with the present invention;

Figure 2 is an enlarged partial sectional view on the line 2—2 of Figure 1, in the direction of the arrows, showing ribs coined on a nut to provide interfering engagement with a throttle lever;

Figure 3 is an edge view of the nut, showing details of its construction;

Figure 4 is a fragmentary sectional view on the line 4—4 of Figure 1, showing the throttle lever secured on a throttle shaft;

Figure 5 is a fragmentary sectional view of another embodiment of a throttle valve in accordance with the present invention; and

Figure 6 is a fragmentary sectional view on the line 6—6 of Figure 5, in the direction of the arrows, showing splines which provide interfering engagement between a nut and a retainer.

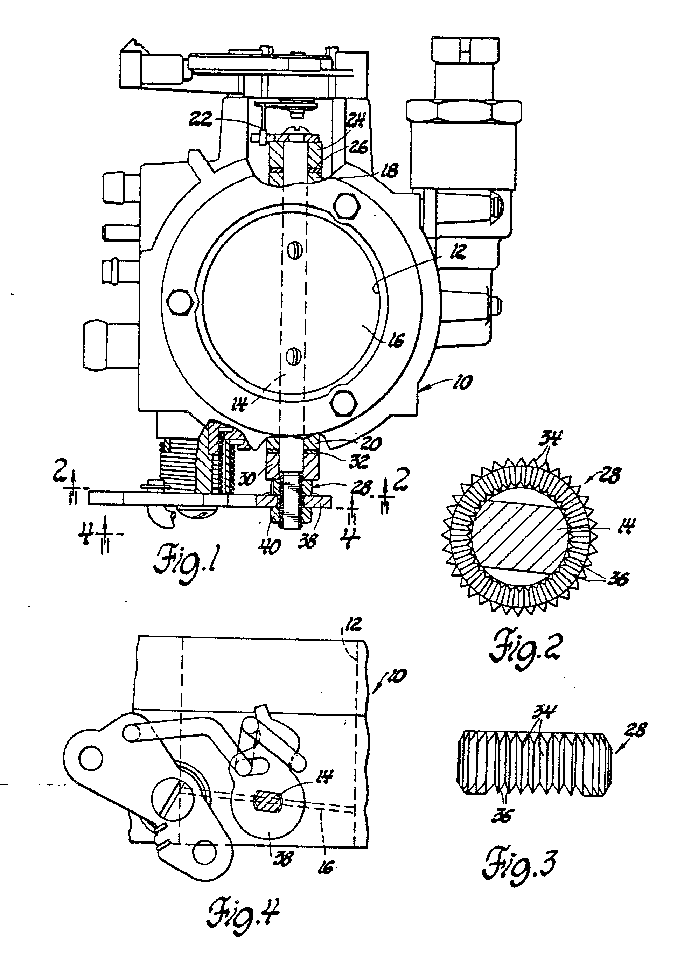

As is shown in Figures 1 to 4 of the drawings, a throttle body 10 for an automotive spark-ignition internal combustion engine has a bore 12 forming a portion of an induction passage for air flow to the engine. A throttle shaft 14 is journalled in the throttle body 10 and extends across the bore 12. A throttle valve 16 is secured to the shaft 14 in a conventional manner.

As is shown in Figure 1, each end of the shaft 14 projects from a respective boss 18, 20 on the throttle body 10. A throttle position sensor lever 22 is secured to one end of the shaft 14, and a spacer 24 and a shim 26 space the sensor lever 22 from the boss 18.

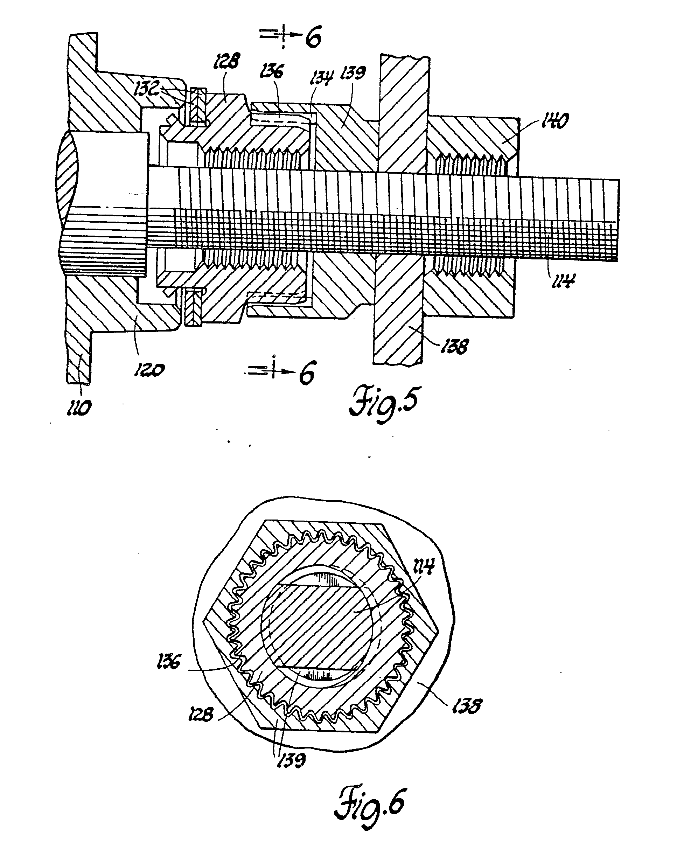

The other end of the shaft 14 is formed with opposed flats to provide a double D cross-sectional configuration, as is shown in Figures 2 and 4, and is threaded to receive a nut 28. A spacer 30 and a shim 32 surround this end of the shaft 14 to space the nut 28 from the boss 20. The threaded engagement between the nut 28 and the shaft 14 allows the nut 28 to be positioned on the shaft 14 to establish a selected clearance between the nut 28 and the boss 20. The outer perimeter of the nut 28 has a series of teeth 34 which make it possible for automated equipment to adjust the position of the nut 28 on the shaft 14 during assembly so that the selected clearance is established.

The surface of the nut 28 adjacent the spacer 30 is smooth, but the opposite surface of the nut 28 is coined to provide a series of ribs 36 which extend radially and project axially, as shown in Figures 2 and 3.

A throttle lever 38 is slidably received on the shaft 14, and has a complementary double D configuration which secures the throttle lever 38 and the shaft 14 for concomitant rotation. The surface of the throttle lever 38 adjacent the nut 28 is coined with a corresponding series of ribs which mesh with ribs 36 on the nut 28: the throttle lever 38 thereby acts as a retainer to secure the nut 28 against rotation on the shaft 14, since such rotation would disturb the selected clearance between the nut 28 and the boss 20.

The throttle lever 38 is shown retained on the shaft 14 by a nut 40. However, other means could alternatively be used to retain the throttle lever 38 on the shaft 14.

Adjustment of the nut 28 on the shaft 14 to establish a selected clearance between the nut 28 and the boss 20 limits the end float (axial displacement) of the shaft 14 within the throttle body 10, to minimize or entirely preclude the potential for wear between the valve 16 and its bore 12. The interfering engagement between the nut 28 and the throttle lever 38 provided by the ribs 36 ensures that the selected clearance is maintained.

The interfering engagement between the nut 28 and the throttle lever 38 could be maintained by other types of structure if required. For example, a locking tab extending from the lever 38 to engage the nut 28 could be used in place of the coined ribs 36. An even more secure construction is shown in Figures 5 and 6, and will now be described.

In the embodiment of a valve assembly in accordance with the present invention which is shown in Figures 5 and 6 of the drawings, a throttle shaft 114 projects from a boss 120 on a throttle body 110. The end of the shaft 114 has a double D cross-sectional configuration, as is shown in Figure 6, and is threaded to receive a nut 128. A pair of shims 132 carried on the nut 128 space the nut 128 from the boss 120. The threaded engagement between the nut 128 and the shaft 114 allows the nut 128 to be positioned on the shaft 114 to establish a selected clearance between the nut 128 and the boss 120. The outer perimeter of the nut 128 has a series of external splines 136 which make it possible for automated equipment to adjust the position of the nut 128 on the shaft 114 during assembly so that the selected clearance is established.

A throttle lever 138 is slidably received on the shaft 114, and has a complementary double D configuration which secures the throttle lever 138 and the shaft 114 for concomitant rotation. A retainer 139 is sandwiched between the throttle lever 138 and nut 128, and has a complementary double D configuration which secures the retainer 139 and the shaft 114 for concomitant rotation. The retainer 139 has a series of internal splines 134 which mesh with the splines 136 on the nut 128: the retainer 139 thereby secures the nut 128 against rotation on the shaft 114, since such rotation would disturb the selected clearance between the nut 128 and the boss 120.

The throttle lever 138 is shown retained on the shaft 114 by a nut 140. However, other means could alternatively be used to retain the throttle lever 138 on the shaft 114.

Adjustment of the nut 128 on the shaft 114 to establish a selected clearance between the nut 128 and the boss 120 limits the end float (axial displacement) of the shaft 114 within the throttle body 110.

The interfering engagement between the nut 128 and the retainer 139 provided by the splines 136 ensures that the selected clearance is maintained.

## Claims

1. A valve assembly in which a valve body (10) defines a fluid flow passage (12), a valve shaft (14) is journalled for rotation in the valve body (10) and extends across the passage (12), a valve member (16) is disposed in the passage (12) and is secured to the shaft (14) and rotatable with the shaft (14) to control flow through the passage (12), an external boss (20) is formed on the body (10), the shaft (14) has a threaded end projecting from the boss (20), and a nut (28) is threaded on the end of the shaft (14), characterised in that the position of the nut (28) on the shaft (14) is adjustable during assembly for establishing a selected clearance between the nut (28) and the boss (20), to thereby limit end float of the shaft (14), a retainer (38) is secured to and rotatable with the shaft (14), and the retainer (38) has interfering engagement with the nut (28) for preventing rotation of the nut (28) about the shaft (14) and consequent axial movement of the nut (28) along the shaft (14), to thereby maintain the said clearance.

2. A valve assembly according to claim 1, characterised in that a valve lever (138) is secured to and rotatable with the valve shaft (114), and that the retainer (139) is disposed about the valve shaft (114) between the nut (128) and the valve lever (138) and has splined engagement (136) with the nut (128).

## Patentansprüche

1. Ventilanordnung, bei der ein Ventilgehäuse (10) einen Fluidstrom-Durchlaß (12) bestimmt, eine Ventilwelle (14) drehbar in dem Gehäuse (10) gelagert ist und sich quer über den Durchlaß (12) erstreckt, ein Ventilteil (16) in dem Durchlaß (12) angeordnet und an der Welle (14) befestigt und mit der Welle (14) drehbar ist, um Strömung durch den Durchlaß (12) zu steuern, ein externer Block (20) an dem Gehäuse (10) gebildet ist, die Welle (14) ein von dem Block (20) vorstehendes mit Gewinde versehenes Ende besitzt und eine Mutter (28) auf das Ende der Welle (14) aufgeschraubt ist, dadurch gekennzeichnet, daß die Lage der Mutter (28) an der Welle (14) während des Zusammenbaues einstellbar ist, um einen ausgewählten Freiraum zwischen der Mutter (28) und dem Block (20) zu schaffen, und dadurch die das Endspiel der Welle (14) zu begrenzen, daß ein Halteglied (38) an der Welle (14) drehfest mit dieser befestigt ist und daß das Halteglied (38) mit der Mutter (28) in Eingriffsanlage ist, um eine Drehung der Mutter (28) um die Welle (14) und sich daraus ergebende Axialbewegung der Mutter (28) längs der Quelle (14) zu verhindern und dadurch den Freiraum aufrechtzuerhalten.

2. Ventilanordnung nach Anspruch 1, dadurch gekennzeichnet, daß ein Ventilhebel (138) an der Ventilwelle (114) mit ihr drehbar befestigt ist, und daß das Halteglied (139) um die Ventilwelle (114) zwischen der Mutter (128) und dem Ventilhebel (138) angeordnet ist und mit der Mutter (128) verkeilenden Eingriff (136) besitzt.

## Revendications

1. Dispositif de vanne comprenant un corps de vanne (10) définissant un conduit d'écoulement de fluide (12), un arbre de vanne (14) tourillonnant dans le corps de vanne (10) et traversant le conduit (12), un volet (16), disposé dans le conduit (12) et fixé à l'arbre (14) pour tourner avec lui afin de commander l'écoulement à travers le conduit (12), un palier externe (20) formé sur le corps (10), l'arbre (14) présentant une extrémité filetée dépassant du palier sur laquelle est vissé un écrou (28), caractérisé en ce que la position de l'écrou (28) sur l'arbre (14) est réglable au cours du montage afin d'établir un jeu déterminé entre l'écrou (28) et le palier (20), pour ainsi limiter le débattement de l'arbre (14), et en ce qu'un arrêtoir (38) est fixé à l'arbre (14) avec lequel il peut tourner est en prise par un calage par contact avec l'écrou (28) pour interdire la rotation de l'écrou (28) sur l'arbre (14) et son déplacement axial sur celui-ci qui en résulte, pour ainsi conserver ce jeu.

2. Dispositif de vanne suivant la revendication 1, caractérisé en ce qu'un levier de vanne (138) est fixé à l'arbre (114) et peut tourner avec lui et en ce que l'arrêtoir (139) est disposé sur l'arbre (114) entre l'écrou (128) et le levier (138) et est en prise avec l'écrou (128) à des cannelures (136).

0 131 364

Fig.1

Fig.2

Fig.3

Fig.4

1

Fig.5

Fig.6